(19) **Europäisches Patentamt**

**European Patent Office**

**Office européen des brevets**

(11) **EP 4 495 846 A1**

(12) **EUROPEAN PATENT APPLICATION**

(43) Date of publication:
**22.01.2025 Bulletin 2025/04**

(21) Application number: **23187001.5**

(22) Date of filing: **21.07.2023**

(51) International Patent Classification (IPC):
**G06N 20/00** (2019.01)   **H04L 61/4511** (2022.01)
**H04L 9/40** (2022.01)

(52) Cooperative Patent Classification (CPC):
**G06N 20/00; H04L 61/4511**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Cujo LLC
Covina, CA 91723 (US)**

(72) Inventors:
• **Nagy, Tamas
1082 Budapest (HU)**
• **Kocsis, Tihamer
1082 Budapest (HU)**

(74) Representative: **Marks & Clerk LLP
15 Fetter Lane
London EC4A 1BW (GB)**

(54) **MACHINE LEARNING PREDICTION POST-PROCESSING**

(57) A plurality of machine learning predictions for consecutive sliding windows over a segment of data are obtained (106). Each machine learning prediction comprises probabilities for predicted classes in a single sliding window. One or more machine learning predictions fulfilling a volatility condition are removed (108) from the plurality of machine learning predictions in order to get filtered machine learning predictions. Probabilities for each predicted class of the filtered machine learning predictions are added up (114) to a sum probability for each predicted class of the filtered machine learning predictions. The predicted class of the filtered machine learning predictions having a highest sum probability is selected (126) as a dominant class of the segment.

FIG. 1

**Description**

FIELD

The invention relates to a method, apparatus, computer program product, and computer-readable medium.

BACKGROUND

Encrypted traffic analysis has been researched by the academia and the industry. However, few solutions have proven to be effective for large scale deployments. The current best practices involve machine learning (ML) approaches such as neural networks. However, further sophistication is desirable to improve the accuracy of machine learning predictions.

SUMMARY

According to an aspect of the disclosure, there is provided subject matter of independent claims.

One or more examples of implementations are set forth in more detail in the accompanying drawings and the detailed description.

BRIEF DESCRIPTION OF DRAWINGS

Some examples will now be described with reference to the accompanying drawings, in which:

FIG. 1 is a flowchart illustrating examples of a method;
FIG. 2 is a block diagram illustrating an example implementation environment for the method;
FIG. 3A and FIG. 3B illustrate machine learning predictions for a segment of consecutive sliding windows over data;
FIG. 4 illustrates probabilities for a predicted class;
FIG. 5A and FIG. 5B are block diagrams illustrating examples of a cybersecurity apparatus;
FIG. 6 is a block diagram illustrating an example of a connected device;
FIG. 7 is a block diagram illustrating an example of a computing resource; and
FIG. 8A and FIG. 8B are block diagrams illustrating examples of a customer-premises equipment.

DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

A machine learning model generates machine learning predictions for consecutive sliding windows over a segment of data. Each machine learning prediction comprises probabilities for predicted classes (for network traffic data, the predicted class represent an identity of an encrypted target website) in a single sliding window. A machine learning prediction post-processing removes too volatile machine learning predictions, and the remaining machine learning predictions are then used to calculate sum probabilities for the predicted classes, and the predicted class having the highest sum probability is selected as a dominant class of the segment. The dominant class may reveal the identity of the encrypted target website for the network traffic data. According to initial tests by the applicant, such post-processing improves the prediction accuracy of the machine learning model.

The machine learning model may be implemented as a neural network. The neural network is trained ("supervised training") using known inputs and results to form probability-weighted associations between the inputs and the results (= machine learning predictions). A difference between an actual result and a target result (= ground truth) is defined as an error. Based on the error, the neural network adjusts the probability-weighted associations according to a learning rule. Successive adjustments train the machine learning model to produce accurate machine learning predictions. The described post-processing may be used regardless of the underlying machine learning approach, and regardless of the shape of data.

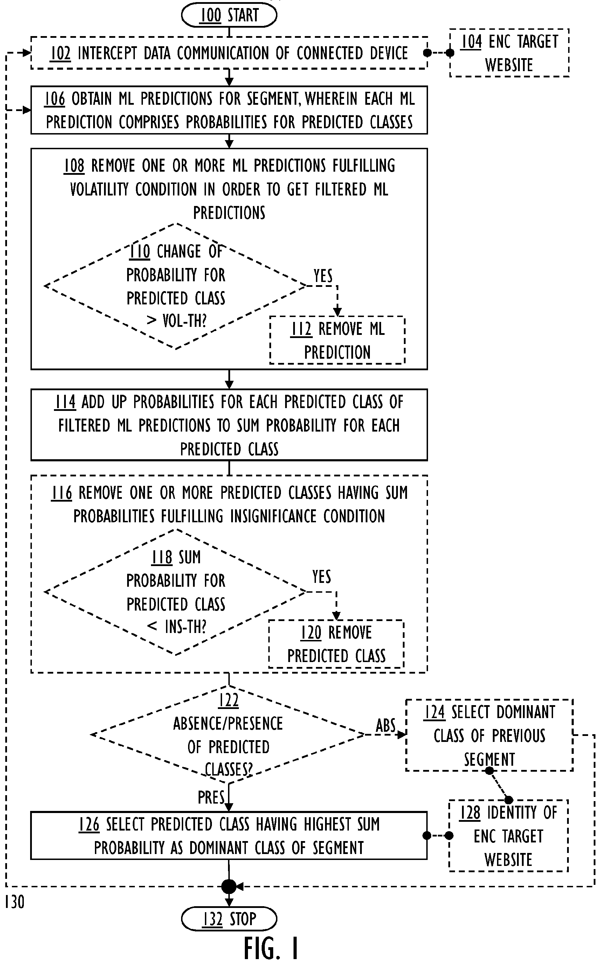

FIG. 1 illustrates a method. The method performs operations related to post-processing of machine learning predictions. In an example, the post-processing is performed during actual production use of the machine learning model: the machine learning predictions obtained from the trained neural network are post-processed, for example.

The method starts in 100 and ends in 132. The method may run in principle endlessly. The infinite running may be achieved by looping 130 back after an operation 126 to an operation 106 or to an optional operation 102 as shown in FIG. 1.

The operations are not strictly in chronological order in FIG. 1, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

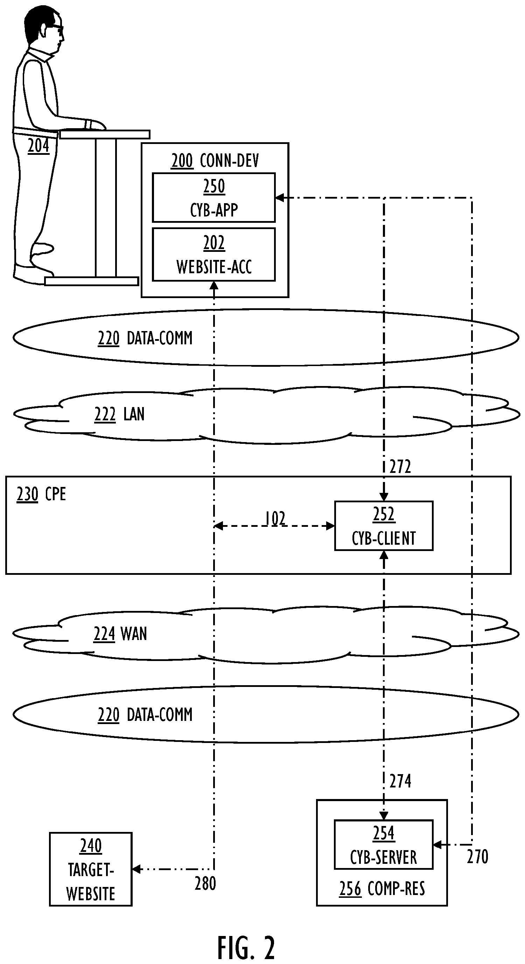

FIG. 2 illustrates an example implementation environment for the method. The method may be a computer-implemented method. The method may operate within a cybersecurity apparatus 252, 254.

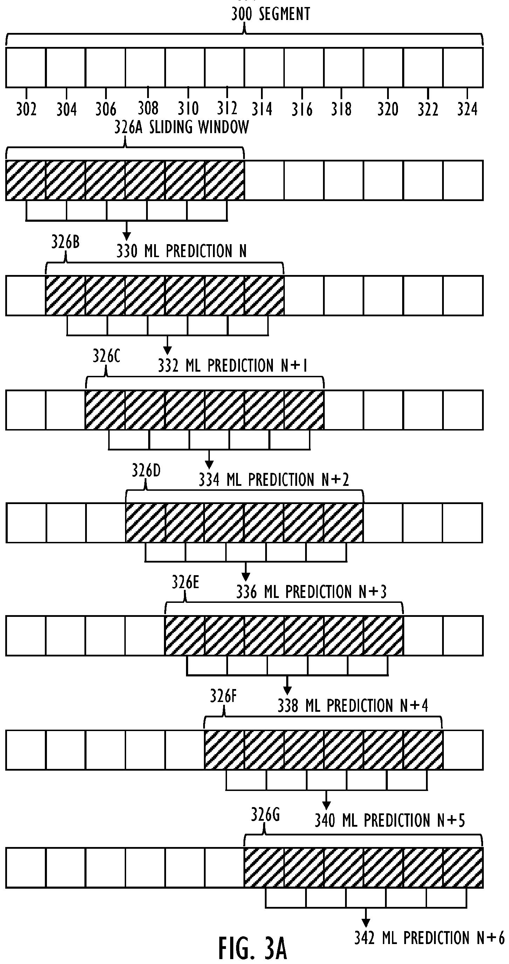

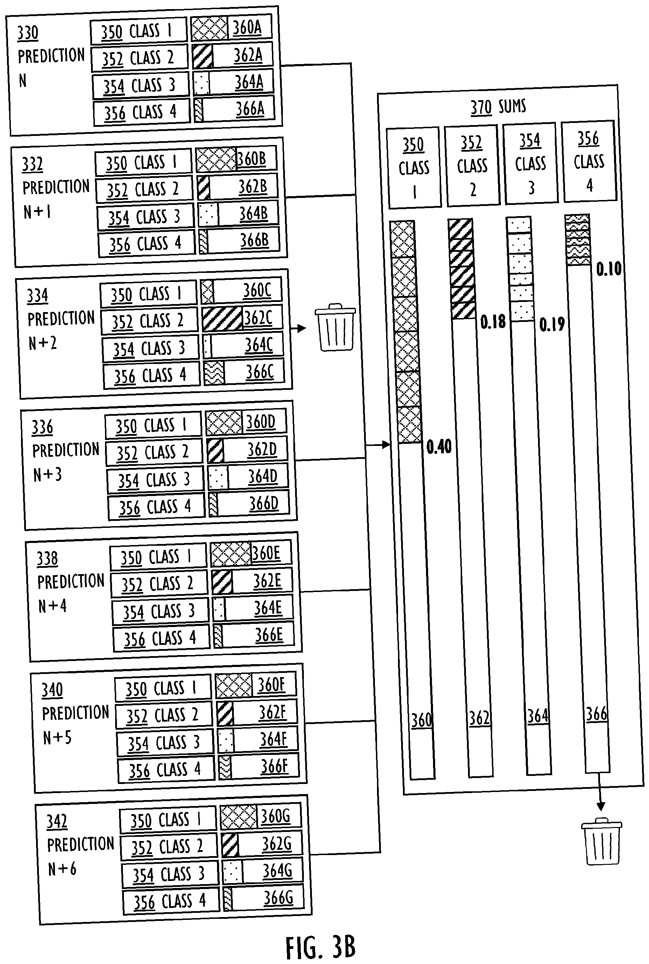

FIG. 3A and FIG. 3B illustrate machine learning predictions for consecutive sliding windows over a segment of data.

First, a plurality of machine learning predictions 330, 332, 334, 336, 338, 340, 342 for consecutive sliding windows 326A, 326B, 326C, 326D, 326E, 326F, 326G over a segment 300 of data are obtained 106.

In the example of FIG. 3A, the segment 300 comprises elements 302, 304, 306, 308, 310, 312, 314, 316, 318, 320, 322, 324, and the first sliding window 326A comprises six leftmost elements 302, 304, 306, 308, 310, 312. For the next sliding window, the window is moved by one element to the right, and the resulting second sliding window 326B comprises elements 304, 306, 308, 310, 312, 314. In this way, the segment 300 is processed using seven sliding windows 326A, 326B, 326C, 326D, 326E, 326F, 326G to provide seven machine learning predictions 330, 332, 334, 336, 338, 340, 342.

Each machine learning prediction 330, 332, 334, 336, 338, 340, 342 comprises probabilities 360A, 362A, 364A, 366A, 360B, 362B, 364B, 366B, 360C, 362C, 364C, 366C, 360D, 362D, 364D, 366D, 360E, 362E, 364E, 366E, 360F, 362F, 364F, 366F, 360G, 362G, 364G, 366G for predicted classes 350, 352, 354, 356 in a single sliding window 326A, 326B, 326C, 326D, 326E, 326F, 326G.

In the example of FIG. 3B, the probability for the predicted class is depicted as a marked area of a rectangle, but in general the probability may be expressed as a number ranging from 0 to 1, or a percentage from 0% to 100%. For example: in the prediction N 330, the probability 360A for the predicted class 350 is 0.45 (or 45%), the probability 362A for the predicted class 352 is 0.25 (or 25%), the probability 364A for the predicted class 354 is 0.20 (or 20%), and the probability 366A for the predicted class 356 is 0.10 (or 10%). The maximum sum of the probabilities 360A, 362A, 364A, 366A for the predicted classes 350, 352, 354, 356 may be 1.00 (or 100%).

In an example, the data comprises network traffic data. The network traffic data exhibits sequential behavior. The network traffic data may comprise various data related to a data communication 220 of a connected device 200, such as the actual payload data, but also data related to the control of the data communication 220. The data may be called, using a mathematical term, a time series, which is a series of data points indexed in time order.

In an example, the network traffic data contains one or more encrypted target websites 104, and each probability 360A, 362A, 364A, 366A, 360B, 362B, 364B, 366B, 360C, 362C, 364C, 366C, 360D, 362D, 364D, 366D, 360E, 362E, 364E, 366E, 360F, 362F, 364F, 366F, 360G, 362G, 364G, 366G for the predicted class 350, 352, 354, 356 corresponds to a probability of a specific encrypted target website. In the example of FIG. 3A and FIG. 3B, the four classes may be named as "CLASS 1" 350, "CLASS 2" 352, "CLASS 3" 354, and "CLASS 4" 356. Each class 350, 352, 354, 356 may represent an identity 128 of the encrypted target website 104. For example, "CLASS 1" = cujo.com, "CLASS 2" = google.com, "CLASS 3" = facebook.com, "CLASS 4" = dangerous-site.com. The encrypted target website 104 may be in domain name system (DNS) query and response messages using an encrypted client hello (ECH) extension of the transport layer security (TLS) protocol. The TLS ECH extension enables DNS clients to encrypt ClientHello messages, which are normally sent in cleartext, under a public key of a DNS proxy server. Earlier iterations of this extension are also known as encrypted server name indication (ESNI). The ECH extension may be used to prohibit HTTPS connections to leak information in the TLS ClientHello message, especially to prohibit the hostname of the target website being leaked.

In an example illustrated in FIG. 2, the network traffic data is intercepted 102 from the data communication 220 of the connected device 200 in a local area network 222 implemented by a customer-premises equipment 230. The CPE 230 is configured to provide the LAN 222 for the data communication 220 of the connected device 220, and an access for the data communication 220 to a wide area network (WAN) 224 such as the Internet. In the data communication 220, the data packets may be transferred from and to the connected device 200.

Next, one or more machine learning predictions 334 fulfilling a volatility condition are removed 108 from the plurality of machine learning predictions 330, 332, 334, 336, 338, 340, 342 in order to get filtered machine learning predictions 330, 332, 336, 338, 340, 342. As shown in FIG. 3B, the machine learning prediction 334 is removed from the seven machine learning predictions 330, 332, 334, 336, 338, 340, 342, whereupon the six filtered machine learning predictions 330, 332, 336, 338, 340, 342 remain.

In an example, the fulfillment of the volatility condition may be checked with a test 110. The test in 110 evaluates "YES" in response to one or more probabilities for predicted classes of a single machine learning prediction exceeding a volatility threshold value in comparison with probabilities for predicted classes of other machine learning predictions for the segment, whereupon the single machine learning prediction is removed 112. The mathematical equation 1 describes the use of the volatility threshold: if an absolute value of the current machine learning prediction minus the past machine learning prediction (an average of the past values within the segment, for example) is greater than the volatility threshold, the current machine learning prediction is removed 112.

$$\sum_{CLASS} |ML\_PRED_{CURRENT} - ML\_PRED_{PAST}| > TH_{VOL} \qquad (1)$$

Then, probabilities for each predicted class of the filtered machine learning predictions are added 114 up to a sum probability for each predicted class of the filtered machine learning predictions 330, 332, 336, 338, 340, 342. In the example of FIG. 3B, the sum probability 360 for the predicted class 350 is calculated from the probabilities 360A, 360B, 360D, 360E, 360F, 360G of the filtered machine learning predictions divided by the number of all machine learning predictions: 0.45 + 0.50 + 0.45 + 0.50 + 0.45 + 0.45 = 2.80 / 7.00 = 0.40. The sum probability 360 for the predicted class 350 is 0.40, the sum probability 362 for the predicted class 352 is 0.18, the sum probability 364 for the predicted class 354 is 0.19, and the sum probability 366 for the predicted class 356 is 0.10. The sum of all sum probabilities 370 is 0.40 + 0.18 + 0.19 + 0.10 = 0.87. The sum of all sum probabilities is not 1.00, because the removed machine learning prediction 334 causes that its probabilities of 360C, 362C, 364C, 366C for the predicted classes 350, 352, 354, 356 effectively each receive the value 0.00 as the divisor is the number of all machine learning predictions, i.e., seven, and not the number of the filtered machine learning predictions, i.e., six.

Finally, the predicted class 350 of the filtered machine learning predictions 330, 332, 336, 338, 340, 342 having the highest sum probability is selected 126 as a dominant class of the segment 300. In the example of FIG. 3B, the predicted class 350 has the highest sum probability 360 with the value of 0.40, and the predicted class 350 is then selected as the dominant class.

In an example, the dominant class 350 of the segment 300 predicts an identity 128 of the specific encrypted target website 104. As explained in the earlier example, the dominant class 350 is "CLASS 1", whereby the identity 128 of the encrypted target website 104 is cujo.com. Consequently, it may be concluded that the user 204 of the connected device 200 browsed the target website cujo.com during the segment 300 representing a time range of the intercepted 102 data communication 220.

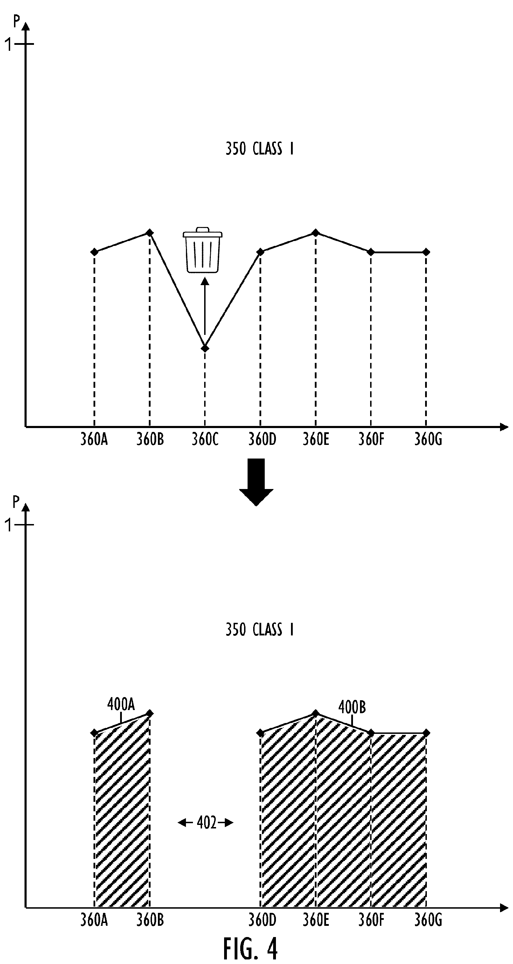

In an example illustrated in FIG. 4, as the machine learning prediction 334 is removed as being too volatile, the probability 360C of the predicted class 350 is also removed, and the upper diagram evolves into the lower diagram. The sum probability 360 of the predicted class 350 of the filtered machine learning predictions 330, 332, 336, 338, 340, 342 corresponds to an area 402 under a probability curve 400A, 400B drawn along the probabilities 360A-360B, and 360D-360E-360F-360G of the predicted class 350 of the filtered machine learning predictions 330, 332, 336, 338, 340, 342. The use of the probabilities and sum probabilities for each predicted class improves the accuracy as compared to a prior art simple voting for the predicted classes.

In an example, after adding 114 up the probabilities for each predicted class of the filtered machine learning predictions to the sum probability for each predicted class of the filtered machine learning predictions 330, 332, 336, 338, 340, 342, and prior to selecting 126 the predicted class of the filtered machine learning predictions 330, 332, 336, 338, 340, 342 having the highest sum probability as the dominant class of the segment 300, one or more predicted classes 356 having sum probabilities fulfilling an insignificance condition are removed 116 from the predicted classes 350, 352, 354, 356 of the filtered machine learning predictions 330, 332, 336, 338, 340.

In an example, the fulfillment of the insignificance condition may be checked with a test 118. The test in 118 evaluates "YES" in response to a sum probability for the predicted class being less than an insignificance threshold value, whereupon the predicted class is removed 120. In the example of FIG. 3B, the insignificance threshold value may be 0.15, for example, whereby the predicted class 356 having the sum probability value 0.10 is removed 120.

In an example, a test 122 is employed to check whether any predicted classes are left after the eventual removing 116. This may be implemented so that after removing 116 the one or more predicted classes 356 having sum probabilities fulfilling an insignificance condition from the predicted classes 350, 352, 354, 356 of the filtered machine learning predictions 330, 332, 336, 338, 340, the test in 112 evaluates "ABS" in response to the absence of all predicted classes 350, 352, 354, 356, whereupon a dominant class of a previous segment is selected 124 as the dominant class of the (present) segment 300, and the test in 112 evaluates "PRES" in response to the presence of at least one predicted class 350, 352, 354, whereupon the original execution sequence 106-108-114-126 is followed so that the predicted class 350 having the highest sum probability 360 is selected 126 as the dominant class of the segment 300. In the example of FIG. 3B, if all predicted classes 350, 352, 354, 356 had sum probabilities 360, 362, 364, 366 below 0.15, they would be removed 120, and as there would be no predicted class left, the dominant class of the previous segment would be set as the dominant class of the segment 300.

The described four operations 106, 108, 114, 126 improve the accuracy of the machine learning predictions by using the described post-processing, which removes machine learning predictions that are too volatile, i.e., machine learning predictions that changed unexpectedly when compared with the surrounding machine learning predictions. In case of a misclassification (the ground truth and the predicted label are different), the model tends to be quite unsure about the prediction. This means that the probability of the most dominant - and therefore predicted - class is relatively low and several other classes have roughly the same probability. As the underlying real-life data produces less jumps, sudden changes, the predictions are post-processed to filter out these unrealistic segments in the predictions. The solution creates a more robust model with better prediction accuracy.

As used herein, the term "connected device" 200, refers to a physical device with communication capabilities configured to perform data communication 280 via the LAN 222 with the WAN 224.

As shown in FIG. 2, the connected device 200 is configured to execute a website access application 202, such as web user interface application (a web browser, for example), or a stand-alone application (a mobile app, for example), and as a result, the data communication 220 including network traffic 280 between the connected device 200 and an accessed website 240 via the LAN 222 and the WAN 224 is caused. The website access application 202 may automatically cause the data communication 220, or, alternatively, the data communication 220 may be generated as a result of an action by a user 204 through user interface controls of the website access application 202. The user 204 may browse with the website access application 202 to one or more encrypted target websites. In the typical use case, only one target website is actively accessed at a time (with an active tab of a browser, for example), even though multiple target websites may be open (in inactive tabs of the browser, for example).

The connected device 200 may create a connection 280 using a packet protocol for the website access application 202 of the connected device 200 to one or more (encrypted) target websites 240. The target website 240 may host a server application enabling access by the website access application. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the connection 280 (using TCP streams or UDP datagrams, for example). In the Internet protocol suite, the connection 280 is operated in a link layer, an internet layer, and a transport layer, and the requests transmitted in the connection 280 are operated in an application layer.

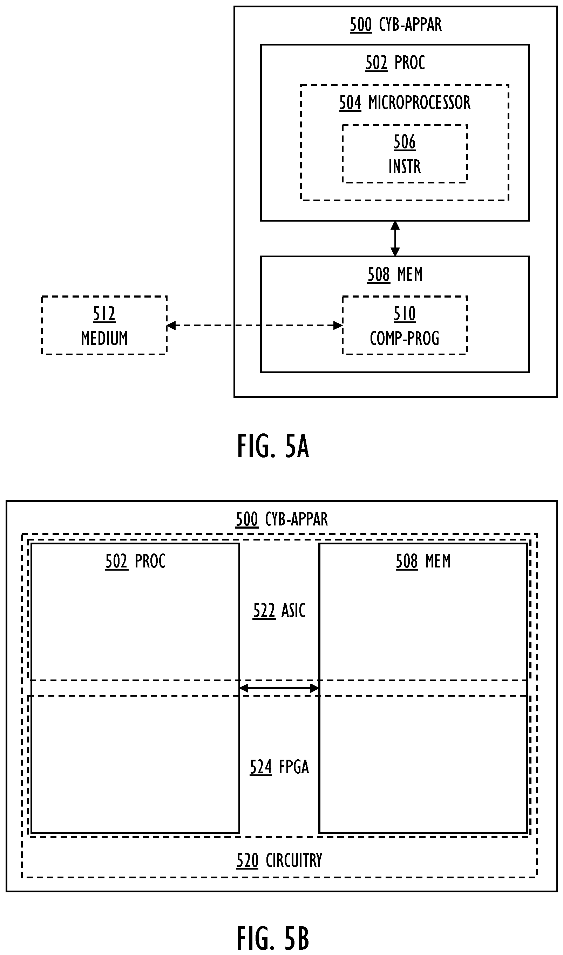

The data communication 220 may be intercepted by a cybersecurity apparatus 500 (described later with reference to FIG. 5A, and FIG. 5B). The intercepted data communication 220 is then analyzed by machine learning algorithms, by a cybersecurity client 252 and/or a cybersecurity server 254, Machine learning algorithms may use a number of data items to enable the detection of the identity 128 of the encrypted target website 104, 240, for example.

The analysis of the intercepted data communication 220 may include collecting device traffic metadata and filtering relevant identification data points from network flow sent and received by the connected device 200 in the LAN 222 of the CPE 230. In addition to the analysis of raw data, or as an alternative, refined data (such as metadata) such as datasets, markers, connection requests, etc. may be analyzed. A suitable network flow monitoring technology, such as Cisco® NetFlow or alternative network flow monitoring technologies (which may be implemented as a service of the operating system of the CPE 230) may be used to intercept the data communication 220. NetFlow, or its equivalents collect Internet Protocol (IP) network traffic as it enters or exits an interface (in the CPE 230, for example), and based on the collected traffic, a source and a destination of the network traffic (in the form of IP addresses) within the data communication 220 may be determined. The CPE 230 (or more specifically the cybersecurity client 252 running on the CPE 230) sends the data points extracted from the data communication 220 (by the NetFlow, for example) to the cybersecurity server 254. The cybersecurity server 254 feeds the data points to an analysis engine, which analyses the extracted data points and provides the identity 128 of the encrypted target website 104, for example.

As the CPE 230 implements the LAN 222 for the data communication 220 of the connected device 200, the CPE 230 may intercept the data communication 220.

As used herein, the term "intercepting" refers to user-approved lawful interception or monitoring of the data communication 220, with a purpose and goal of increasing cybersecurity related to the connected device 200 and its operating environment. As the data communication 220 is intercepted, the data communication 220 is accessed and collected between the transmitting device and the receiving device. The data communication 220 may be intercepted even if the digital data transmission units (such as messages) in the data communication 220 are addressed to the receiving device. The intercepting may be implemented so that the data communication 220 is passively monitored, i.e., the data communication 220 is not affected by the intercepting. Alternatively, if needed, the intercepting may include a seizing of the data communication 220, i.e., the data communication 220 is actively influenced so that a connection and/or requests and/or responses are blocked until it may be decided whether a cybersecurity action (such as blocking of the data communication 220) is required.

As used herein, the term "data communication" 220 refers to the transmission and/or reception of (digital) data by the connected device 200. The data communication 220 is transferred using digital data transmission units over a communication medium such as one or more communication channels (implemented by copper wires, optical fibers, and wireless communication using radio spectrum, for example) between the connected device 200 and another network node such as the target website 240. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable data communication 220. The communication protocols may implement a protocol stack with different conceptual protocol layers. In a connection-oriented data communication 220, a connection needs to be established for transferring the payload data. In a connectionless data communication 220, the payload data is transferred over different paths with an independent routing.

The WAN such as the Internet 224 uses the Internet protocol suite including TCP/IP and UDP/IP to globally connect computer networks so that communication is enabled between connected devices 200 and various Internet services provided typically by websites 240. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) running in the connected device 200.

From the cybersecurity point of view, the Internet services may be divided between legitimate services and fraud services. Legitimate services operate according to moral and ethical standards enforced by law, police, or social pressure. Fraud services do not follow moral and ethical standards, and often perform criminal acts to disclose, steal or damage electronic data, software, or hardware, or disrupt or misdirect services provided by the electronic data, software, and hardware. Fraud services may be fraudulent to the core, i.e., their only reason for existence is to perform malicious acts, but they may also be legitimate services as such, but being infected with malicious software so as to enable criminal acts. The criminal acts in general include, but are not limited to using a backdoor to bypass security mechanisms, make a denial-of-service attack (DoS), also as a distributed denial-of-service (DDoS), installing software worms or keylogger, eavesdropping a communication, phishing, spoofing, tampering, installing malware, etc. Note that different service providers, such as network service providers, cloud service operators, and cybersecurity operators, just to name a few, may operate and/or manage the various network nodes shown in the FIG. 2.

The CPE 230 may be located at home or office of a user 204 of the connected device 200. The CPE 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless) LAN 222 and thus enabling the user 204 of the connected device 200 to access communication services of the NSP, and the Internet 224. Note that the CPE 230 may also be implemented with wireless technology, such as a 4G or 5G CPE 230 configured to exchange a 5G cellular radio network signal with the WAN 224 of a base station operated by the broadband service provider, and generate a Wi-Fi® (or WLAN) or wired signal to implement the LAN 222 to provide access for the connected device 200. Furthermore, the 4G/5G CPE 230 performs the conversion between the 4G/5G cellular radio network signal and the Wi-Fi® or wired signal.

FIG. 5A and FIG. 5B illustrate examples of a cybersecurity apparatus 500. The method described with reference to FIG. 1 may be implemented at least partly by the cybersecurity apparatus 500, i.e., the machine learning prediction post-processing may be implemented by the cybersecurity apparatus 500. The apparatus 500 may execute the operations defined in the method. The apparatus 500 may implement an algorithm, which includes at least the operations of the method, but may optionally include other operations related to the cybersecurity in general. Note that the method described with reference to FIG. 1 may be implemented as a part of the cybersecurity client 252 running in the CPE 230 as shown in FIG. 2, an/or as a functionality embedded in the CPE 230, and/or as a part of the cybersecurity server 254 running in the computing resource 256. As shown in FIG. 2, the cybersecurity apparatus 500 may comprise various distributed actors communicatively coupled 270, 272, 274 with each other.

The apparatus 500 comprises one or more memories 508, and one or more processors 502 coupled to the one or more memories 508 configured to execute the operations described in FIG. 1.

The term "processor" 502 refers to a device that is capable of processing data. The term "memory" 508 refers to a device that is capable of storing data run-time (= working memory) or permanently (= non-volatile memory).

As shown in FIG. 5A, the one or more processors 502 may be implemented as one or more microprocessors 504, which are configured to execute instructions 506 of a computer program 510 stored on the one or memories 508. The microprocessor 504 implements functions of a central processing unit (CPU) on an integrated circuit. The CPU is a logic machine executing the instructions 506 of the computer program 510. The CPU may comprise a set of registers, an arithmetic logic unit (ALU), and a control unit (CU). The control unit is controlled by a sequence of the instructions 506 transferred to the CPU from the (working) memory 508. The control unit may contain a number of microinstructions for basic operations. The implementation of the microinstructions may vary, depending on the CPU design. The one or more microprocessors 504 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 510 may be written ("coded") by a suitable programming language, and the resulting executable code may be stored in the memory 508 and executed by the one or more microprocessors 504.

The computer program 510 implements the method/algorithm. The computer program 510 may be coded using a programming language, which may be a high-level programming language, such as Go, Java, C, or C++, or with a low-level programming language, such as an assembler or a machine language. The computer program 510 may be in source code form, object code form, executable file, or in some intermediate form, but for use in the one or more microprocessors 504 it is in an executable form as an application. There are many ways to structure the computer program 510: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 510 for performing a wide variety of standard operations. In addition, an operating system (such as a general-purpose operating system) may provide the computer program 510 with system services.

As shown in FIG. 5A, a computer-readable medium 512 may store the computer program 510, which, when executed by the apparatus 500 (the computer program 510 may first be loaded into the one or more microprocessors 504 as the instructions 506 and then executed by one or more microprocessors 504), causes the apparatus 500 (or the one or more microprocessors 504) to carry out the method/algorithm. The computer-readable medium 512 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 510 to the one or memories 508 of the apparatus 500. In some jurisdictions, depending on the legislation and the patent practice, the computer-readable medium 512 may not be the wired or wireless telecommunications signal.

As shown in FIG. 5B, the one or more processors 502 and the one or more memories 508 may be implemented by a circuitry 520. A non-exhaustive list of implementation techniques for the circuitry 520 includes, but is not limited to application-specific integrated circuits (ASIC) 522, field-programmable gate arrays (FPGA) 524, application-specific standard products (ASSP), standard integrated circuits, logic components, and other electronics structures employing custom-made or standard electronic circuits.

Note that in modern computing environments a hybrid implementation employing both the microprocessor technology of FIG. 5A and the custom or standard circuitry of FIG. 5B is feasible.

Functionality of the apparatus 500, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

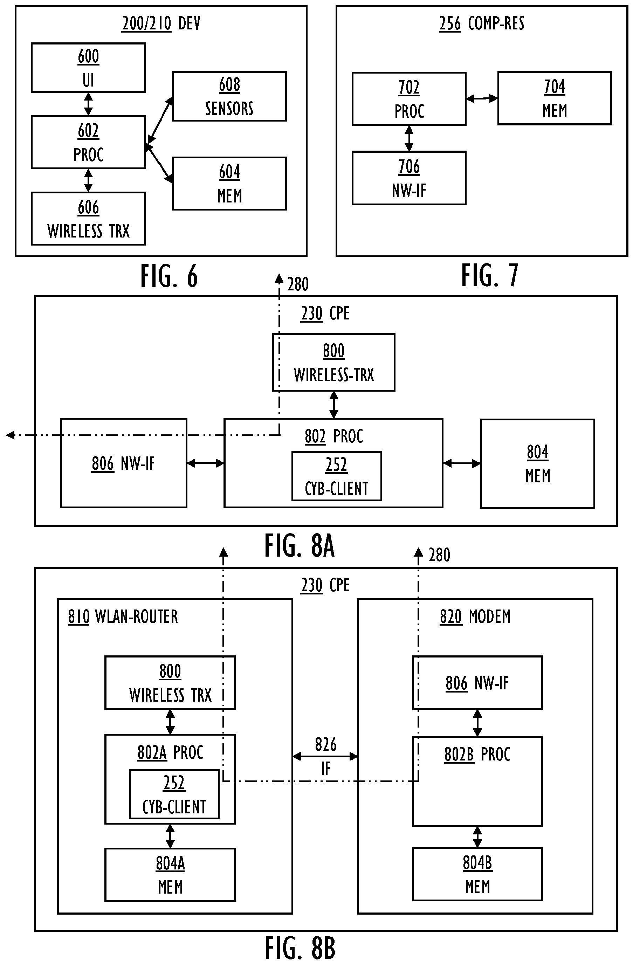

FIG. 6 illustrates an example of the connected device 200. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, another kind of ubiquitous computing device, or some other type of a wired or wireless mobile or stationary communication device operating with or without a subscriber identification module (SIM) or an embedded SIM (eSIM). The connected device 200 may be a personal communication device of the user 204. The connected device may also be an Internet of Things (IoT) device 200, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

As shown in FIG. 6, the connected device 200 comprises one or more memories 604, and one or more processors 602 coupled to the one or more memories 604 configured to carry out the operation of the connected device 200. In addition, the connected device 200 may comprise a user interface 600 (such as a touch screen or one or more LEDs), and one or more wireless transceivers 606 (such as a WLAN transceiver, a cellular radio network transceiver, and a short-range radio transceiver), and also one or more sensors 608. As shown in FIG. 2, the connected device 200 may be running a cybersecurity application 250.

FIG. 7 illustrates an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 7, the server apparatus 256 comprises one or more memories 704, and one or more processors 702 coupled to the one or more memories 704 configured to carry out a part of the method/algorithm. In addition, the server apparatus 256 comprises a network interface (such as an Ethernet network interface card) 706 configured to couple the server apparatus 256 to the Internet 224. As shown in FIG. 2, the computing resource 256 may be running a cybersecurity server application 254.

FIG. 8A and FIG. 8B illustrate examples of a customer-premises equipment 230.

In FIG. 8A, the CPE 230 is an integrated apparatus comprising one or more memories 804, and one or more processors 802 coupled to the one or more memories 804 configured to carry out a part of the method/algorithm. Additionally, the CPE 230 comprises a wireless radio transceiver 800 configured to create the WLAN 222 for enabling access by the connected device 200. The CPE 230 also comprises a network interface 806 to act as a modem configured to connect to the telecommunication circuit of the carrier at the demarcation point, i.e., to the WAN 224. The network interface 806 may operate as a Digital Subscriber Line (DSL) modem using different variants such as Very high bitrate DSL (VDSL), Symmetric DSL (SDSL), or Asymmetric DSL (ADSL). The network interface 806 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA®), the Multimedia Terminal Adapter (MTA), and the fourth generation (4G), fifth generation (5G), or even a higher generation cellular radio network access technology. As shown also in FIG. 2, the CPE 230 may be running a cybersecurity client 252.

In FIG. 8B, the CPE 230 is a two-part apparatus. A WLAN router part 810 comprises the one or more memories 804A, the one or more processors 802A coupled to the one or more memories 804A configured to carry out the method/algorithm, and the wireless transceiver 800 to create the WLAN 222 for enabling access by the connected device 200. A modem part 820 comprises the one or more processors 802B coupled to one or more memories 804B configured to carry out modem operations, and the network interface 806 to act as the modem configured to connect to the WAN 224. The WLAN router part 810 may be purchased by the user 204 of the connected device 200 to gain access to a part of the method/algorithm, whereas the modem part 820 may be provided by a carrier providing the telecommunication circuit access. As shown in FIG. 8B, the WLAN router part 810 and the modem part 820 may be communicatively coupled by an interface 826 (such as a wired Ethernet interface). As shown in FIG. 8B, the platform may be provided by the one or more memories 804A, and the one or more processors 802A, but also additionally, or alternatively, by the one or more memories 804B, and the one or more processors 802B.

Instead of the cybersecurity client 252 illustrated in FIG. 8A and FIG. 8B, another component running on the CPE 230 may be configured to run an algorithm implementing the method of FIG. 1.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt®), which is an open-source project for embedded operating systems of the CPE 230 based also on Linux. At the time of writing of this patent application, more information regarding the OpenWrt® may be found in openwrt.org.

As illustrated in FIG. 2, the functionality of the network message processing including the capability to carry out the method/algorithm, may be implemented in a centralized fashion by a stand-alone single physical unit 230, or alternatively in a distributed fashion using more than one communicatively coupled physical units 230, 256.

These physical units comprise the CPE 230 running the cybersecurity client 252, and the computing resource 256 running the cybersecurity server 254. The method/algorithm operations may be implemented by one or more of these apparatuses 230, 256 executing the cybersecurity software 252, 254.

As can be understood by the person skilled in the art, the method/algorithm operations may be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may comprise a stand-alone fashion to carry out the method/algorithm, or a part of the functionality augmented by the functionality of the cybersecurity server 254. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

**Claims**

1. A computer-implemented method comprising:

   obtaining (106) a plurality of machine learning predictions for consecutive sliding windows over a segment of data, wherein each machine learning prediction comprises probabilities for predicted classes in a single sliding window;
   removing (108) from the plurality of machine learning predictions one or more machine learning predictions fulfilling a volatility condition in order to get filtered machine learning predictions;
   adding (114) up probabilities for each predicted class of the filtered machine learning predictions to a sum probability for each predicted class of the filtered machine learning predictions; and
   selecting (126) the predicted class of the filtered machine learning predictions having a highest sum probability as a dominant class of the segment.

2. The method of claim 1, wherein the data comprises network traffic data.

3. The method of claim 2, wherein the network traffic data is intercepted (102) from a data communication of a connected device in a local area network implemented by a customer-premises equipment.

4. The method of claim 2, wherein the network traffic data contains one or more encrypted target websites (104), each probability for the predicted class corresponds to a probability of a specific encrypted target website, and the dominant class of the segment predicts an identity (128) of the specific encrypted target website.

5. The method of any preceding claim, wherein removing (108) from the plurality of machine learning predictions the one or more machine learning predictions fulfilling the volatility condition in order to get the filtered machine learning predictions further comprises:
   in response to one or more probabilities for predicted classes of a single machine learning prediction exceeding a volatility threshold value in comparison with probabilities for predicted classes of other machine learning predictions for the segment (110-YES), removing (112) the single machine learning prediction.

6. The method of any preceding claim, wherein the sum probability of each predicted class of the filtered machine learning predictions corresponds to an area under a probability curve drawn along the probabilities of each predicted class of the filtered machine learning predictions.

7. The method of any preceding claim, further comprising, after adding (114) up the probabilities for each predicted class of the filtered machine learning predictions to the sum probability for each predicted class of the filtered machine learning predictions, and prior to selecting (126) the predicted class of the filtered machine learning predictions having the highest sum probability as the dominant class of the segment:
removing (116) from the predicted classes of the filtered machine learning predictions one or more predicted classes having sum probabilities fulfilling an insignificance condition.

8. The method of claim 7, wherein removing (116) from the predicted classes of the filtered machine learning predictions the one or more predicted classes having sum probabilities fulfilling the insignificance condition further comprises:
in response to a sum probability for the one or more predicted class being less than an insignificance threshold value (118-YES), removing (120) the one or more predicted classes.

9. The method of claim 7 or 8, further comprising, after removing (116) from the predicted classes of the filtered machine learning predictions the one or more predicted classes having sum probabilities fulfilling the insignificance condition:

in response to the absence of all predicted classes (122-ABS), selecting (124) a dominant class of a previous segment as the dominant class of the segment; and
in response to the presence of at least one predicted class (122-PRES), selecting (126) the predicted class having the highest sum probability as the dominant class of the segment.

10. An apparatus comprising means for carrying out the method of any preceding claim 1-9.

11. A computer program product comprising instructions which, when executed by an apparatus, cause the apparatus to carry out the method of any preceding claim 1-9.

12. A computer-readable medium comprising a computer program with instructions which, when executed by an apparatus, cause the apparatus to carry out the method of any preceding claim 1-9.

FIG. 1

EP 4 495 846 A1

FIG. 2

12

300 SEGMENT

302 304 306 308 310 312 314 316 318 320 322 324

326A SLIDING WINDOW

326B
330 ML PREDICTION N

326C
332 ML PREDICTION N+1

326D
334 ML PREDICTION N+2

326E
336 ML PREDICTION N+3

326F
338 ML PREDICTION N+4

326G
340 ML PREDICTION N+5

342 ML PREDICTION N+6

FIG. 3A

330 PREDICTION N
350 CLASS 1 — 360A
352 CLASS 2 — 362A
354 CLASS 3 — 364A
356 CLASS 4 — 366A

332 PREDICTION N+1
350 CLASS 1 — 360B
352 CLASS 2 — 362B
354 CLASS 3 — 364B
356 CLASS 4 — 366B

334 PREDICTION N+2
350 CLASS 1 — 360C
352 CLASS 2 — 362C
354 CLASS 3 — 364C
356 CLASS 4 — 366C

336 PREDICTION N+3
350 CLASS 1 — 360D
352 CLASS 2 — 362D
354 CLASS 3 — 364D
356 CLASS 4 — 366D

338 PREDICTION N+4
350 CLASS 1 — 360E
352 CLASS 2 — 362E
354 CLASS 3 — 364E
356 CLASS 4 — 366E

340 PREDICTION N+5
350 CLASS 1 — 360F
352 CLASS 2 — 362F
354 CLASS 3 — 364F
356 CLASS 4 — 366F

342 PREDICTION N+6
350 CLASS 1 — 360G
352 CLASS 2 — 362G
354 CLASS 3 — 364G
356 CLASS 4 — 366G

370 SUMS

350 CLASS 1
352 CLASS 2
354 CLASS 3
356 CLASS 4

0.40 — 360
0.18 — 362
0.19 — 364
0.10 — 366

FIG. 3B

FIG. 4

FIG. 5A

FIG. 5B

## 200/210 DEV

**600**
UI

**602**
PROC

**608**
SENSORS

**604**
MEM

**606**
WIRELESS TRX

### FIG. 6

## 256 COMP-RES

**702**
PROC

**704**
MEM

**706**
NW-IF

### FIG. 7

↑ 280

## 230 CPE

**800**
WIRELESS-TRX

**806** NW-IF

**802** PROC

**252**
CYB-CLIENT

**804**
MEM

### FIG. 8A

↑ 280

## 230 CPE

**810** WLAN-ROUTER

**800**
WIRELESS TRX

**802A** PROC

**252**
CYB-CLIENT

**804A**
MEM

**826**
IF

**820** MODEM

**806** NW-IF

**802B** PROC

**804B**
MEM

### FIG. 8B

Europäisches
Patentamt

European
Patent Office

Office européen
des brevets

# EUROPEAN SEARCH REPORT

**Application Number**

EP 23 18 7001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG ZIQING ZHANGZIQING@IIE AC CN ET AL: "Deep Forest with LRRS Feature for Fine-grained Website Fingerprinting with Encrypted SSL/TLS", PROCEEDINGS OF THE 28TH ACM JOINT MEETING ON EUROPEAN SOFTWARE ENGINEERING CONFERENCE AND SYMPOSIUM ON THE FOUNDATIONS OF SOFTWARE ENGINEERING, ACM, NEW YORK, NY, USA, 3 November 2019 (2019-11-03), pages 851-860, XP058640418, DOI: 10.1145/3357384.3357993 ISBN: 978-1-4503-7043-1 * Section 3 * | 1-12 | INV. G06N20/00 H04L61/4511 H04L9/40 |

-----

|  |  |  |  |
|---|---|---|---|
|  |  |  | TECHNICAL FIELDS SEARCHED (IPC) |
|  |  |  | G06N H04L |

The present search report has been drawn up for all claims

| Place of search | Date of completion of the search | Examiner |
|---|---|---|
| The Hague | 10 January 2024 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)